# EUROPEAN PATENT APPLICATION

(11) **EP 4 354 647 A1**
(43) Date of publication of application: **17.04.2024**
(21) Application number: 22823307.8
(22) Date of filing: 07.07.2022
(51) Int. Cl.: H01M 50/593

(54) **BATTERY CELL**

(30) Priority: 17.06.2022 CN 202210691303
(71) Applicant: Eve Power Co., Ltd., Jingmen, Hubei 448000 (CN)
(72) Inventor: TAN, Yumu, Jingmen, Hubei 448000 (CN); SHU, Kuanjin, Jingmen, Hubei 448000 (CN); HE, Xiaowu, Jingmen, Hubei 448000 (CN); HE, Wei, Jingmen, Hubei 448000 (CN)
(74) Representative: HGF
(86) International application number: PCT/CN2022/104268
(87) International publication number: WO 2023/240717

(57) **Abstract**

A cell includes an internal fixed structure of the cell, a pole core, a housing, and a top cover. The internal fixed structure of the cell includes a lower insulating plastic and a holder mounted on the lower insulating plastic. The lower insulating plastic is provided with an abutting surface. The abutting surface abuts against the pole core. The pole core is disposed in the housing and connected to a tab. The top cover is provided with a terminal. The top cover is connected to an end of the housing. The top cover is connected to the lower insulating plastic of the internal fixed structure of the cell. The abutting surface of the lower insulating plastic and the housing each abut against an outer wall of the pole core.

## Description

This application claims priority to Chinese Patent Application No. 202210691303.7 filed with the China National Intellectual Property Administration (CNIPA) on Jun. 17, 2022, the disclosure of which is incorporated herein by reference in its entirety.

### TECHNICAL FIELD

The present application relates to the technical field of cells, for example, a cell.

### BACKGROUND

As a main power source of an electric vehicle, a cell of a battery has become one of the key components of the electric vehicle. In the cell, a plastic insulator is generally used for isolating a top cover from a post, thereby avoiding the conduction between the top cover and the post. The insulator includes an upper insulating plastic outside the cell and a lower insulating plastic inside the cell. The lower insulating plastic is provided with the post and other components. A tab drawn from a pole core needs to be welded to the post. To avoid a short circuit caused by the pole core inside the cell touching the post on the lower insulating plastic, a holder is disposed on the lower insulating plastic to isolate the pole core from the post and avoid the instability of the internal structure of the cell due to the excessively large assembly space of the lower insulating plastic inside the cell.

In the cell in the related art, when the holder is assembled, the holder often directly covers the lower insulating plastic, and at the same time, the interference between the holder and the bent tab should be avoided. The assembly is thus complex. Moreover, the assembly tends to be improper, and the holder is connected unstably, making the internal structure of the cell unstable and making the pole core prone to shake, resulting in the reduction of the stability of the cell. Therefore, the safety performance of the cell cannot be guaranteed.

### SUMMARY

The present application provides a cell, so as to make a holder easy to mount, improve the stability of a pole core fixed inside the cell, prevent the pole core from being displaced inside the cell, ensure the stability of the internal structure of the cell, and improve the safety performance of the cell.

The cell includes an internal fixed structure of the cell, a pole core, a housing, and a top cover. The internal fixed structure of the cell includes a lower insulating plastic and a holder mounted on the lower insulating plastic. The lower insulating plastic is provided with an abutting surface. The abutting surface abuts against the pole core. The pole core is disposed in the housing and connected to a tab. The top cover is provided with a terminal. The top cover is connected to an end of the housing. The top cover is connected to the lower insulating plastic of the internal fixed structure of the cell. The abutting surface of the lower insulating plastic and the housing each abut against an outer wall of the pole core.

### BRIEF DESCRIPTION OF DRAWINGS

FIG. 1 is a sectional view of a cell according to an embodiment of the present application.
FIG. 2 is a partial structural view of a cell according to an embodiment of the present application.
FIG. 3 is a partial sectional view of a cell according to an embodiment of the present application.
FIG. 4 is a structural view of an internal fixed structure of a cell according to an embodiment of the present application.
FIG. 5 is an exploded view of an internal fixed structure of a cell according to an embodiment of the present application.
FIG. 6 is an enlarged view of part A of FIG. 5.
FIG. 7 is an enlarged view of part B of FIG. 5.
FIG. 8 is a structural view of a holder according to an embodiment of the present application.
FIG. 9 is a structural view of a tab according to an embodiment of the present application.
FIG. 10 is a structural view of a bottom bracket according to an embodiment of the present application.

### Reference list

- 1: lower insulating plastic
- 11: abutting surface
- 12: mounting slot
- 2: holder
- 21: protrusion
- 3: first side push connecting portion
- 31: slider
- 311: snap block
- 4: second side push connecting portion
- 41: side push chute
- 411: side push opening
- 42: corner missing structure
- 421: snap slot
- 5: tab
- 51: first connecting portion
- 52: bend
- 521: empty slot
- 53: second connecting portion
- 6: top cover
- 7: terminal
- 71: post
- 8: housing
- 81: bottom bracket
- 811: opening
- 9: pole core

### DETAILED DESCRIPTION

In the description of the present application, terms "joined", "connected" and "secured" are to be understood in a broad sense unless otherwise expressly specified and limited. For example, the term "connected" may refer to "securely connected", "detachably connected" or "integrated", may refer to "mechanically connected" or "electrically connected" or may refer to "connected directly", "connected indirectly through an intermediary" or "connected inside two components" or "interaction relations between two components". For those of ordinary skill in the art, meanings of the preceding terms in the present application may be construed according to circumstances.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

In the description of the present application, it should be noted that orientations or position relations indicated by terms such as "above", "below", "right" and the like are based on orientations or position relations shown in the drawings. These orientations or position relations are intended only to facilitate and simplify the operation, and not to indicate or imply that a device or element referred to must have such orientations or must be configured or operated in such orientations. Thus, these orientations or position relations are not to be construed as limiting the present application. In addition, the terms "first" and "second" are used only to distinguish between descriptions and have no special meaning.

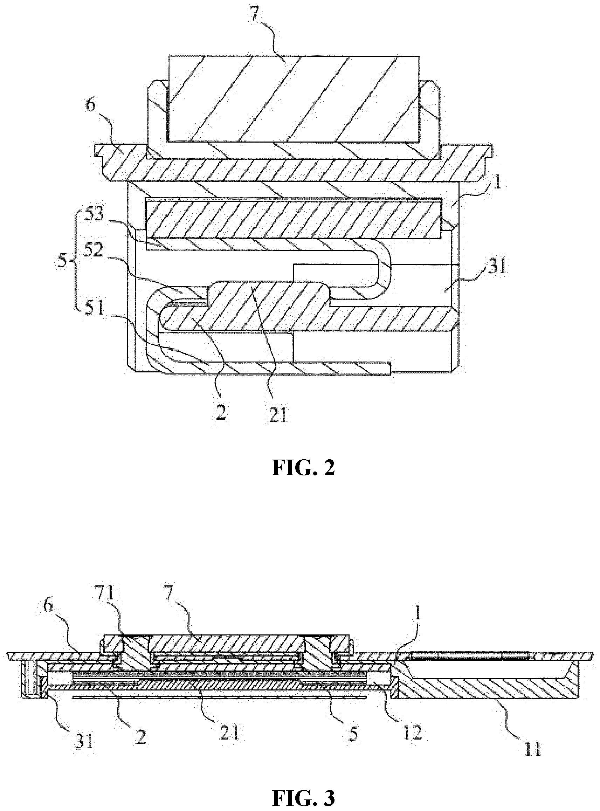

Technical solutions of the present application are described below through embodiments in conjunction with FIGS. 2 to 8.

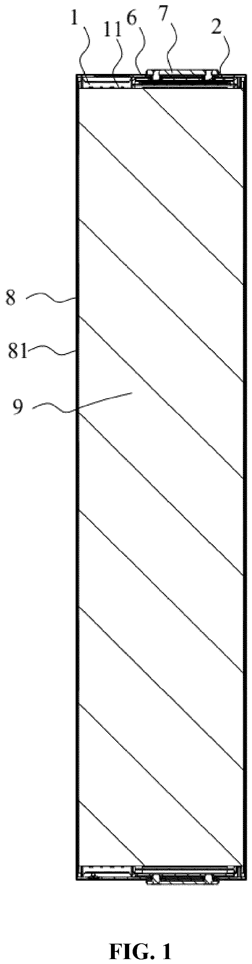

As shown in FIGS. 1, 2 and 3, this embodiment provides a cell. The cell includes an internal fixed structure of the cell. The internal fixed structure of the cell includes a lower insulating plastic 1 and a holder 2. The lower insulating plastic 1 is provided with an abutting surface 11. The cell includes a housing 8 and a top cover 6. A pole core 9 is disposed in the housing 8. The abutting surface 11 abuts against the pole core 9. The pole core 9 is connected to a tab 5. The top cover 6 is provided with a terminal 7. The top cover 6 is connected to an end of the housing 8. The top cover 6 is connected to the lower insulating plastic 1 of the internal fixed structure of the cell. The abutting surface 11 of the lower insulating plastic 1 and the housing 8 each abut against an outer wall of the pole core 9.

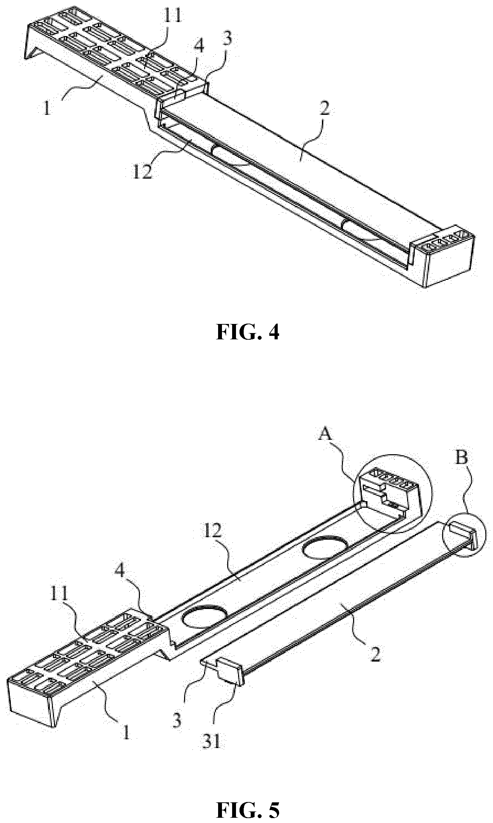

As shown in FIG. 4, the holder 2 is provided with a first side push connecting portion 3, the lower insulating plastic 1 is provided with a second side push connecting portion 4, and the holder 2 is mounted on the second side push connecting portion 4 by a side push along the thickness direction of the cell through the first side push connecting portion 3. The holder 2 is securely mounted on the lower insulating plastic 1 by a side push so that the holder 2 is very convenient to mount. The side push direction of the holder 2 is along the thickness direction of the cell, and the holder 2 does not interfere with the tab 5 so that the internal structure of the cell is stable, thereby preventing the pole core 9 from shaking and improving the stability of the cell and the safety performance of the cell.

In this embodiment, the housing 8 is made of aluminum. The housing 8 made of aluminum or aluminum alloy has many advantages, such as high capacity, light weight, high specific energy, high safety, and flexible production design.

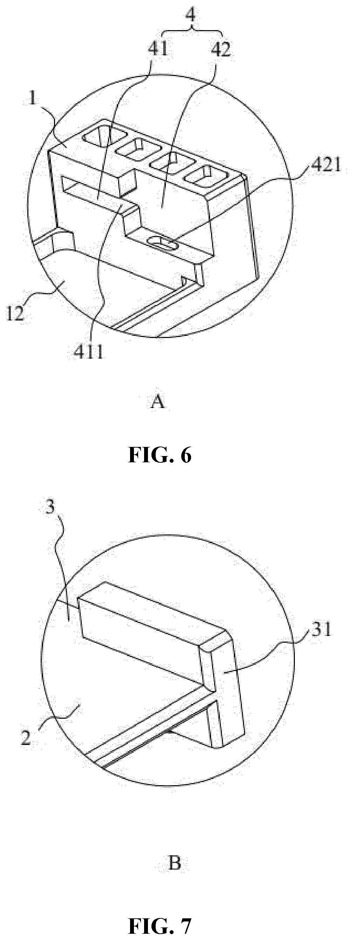

As shown in FIGS. 5 and 6, the lower insulating plastic 1 is provided with a groove, the holder 2 has a plate-like structure and is mounted in the groove, the first side push connecting portion 3 is disposed at edges on two sides of the holder 2, the second side push connecting portion 4 includes a side push chute 41 opened on an inner wall of the groove of the lower insulating plastic 1, a side push opening 411 is opened at an end of the side push chute 41, and the first side push connecting portion 3 slides into the side push chute 41 through the side push opening 411. To facilitate the installation of the holder 2, fillet structures are disposed at edges of the holder 2 and the first side push connecting portion 3 facing the bottom of the chute, a fillet structure is disposed at an edge of the side push opening 411, and the smooth fillet structures have a guiding function so that the holder 2 drives the first side push connecting portion 3 to slide into the side push chute 41 more smoothly, thereby reducing the assembly difficulty and requirements for the machining accuracy. The holder 2 is securely assembled on the lower insulating plastic 1 by a side push, thereby increasing the structural strength of the lower insulating plastic 1.

In an embodiment, the orientation of the side push opening 411 and the length direction of the side push chute 41 are parallel to the thickness direction of the cell so that the side push of the holder 2 is smooth and more convenient.

As shown in FIGS. 6 and 7, the first side push connecting portion 3 is provided with a slider 31, and the slider 31 is fixedly connected to the holder 2. In this embodiment, the slider 31 is integrally formed with the holder 2. The second side push connecting portion 4 includes a corner missing structure 42 disposed on the holder 2, the corner missing structure 42 is connected to the side push opening 411, and when sliding into the side push chute 41, the first side push connecting portion 3 drives the slider 31 to just enter the corner missing structure 42. The cooperation between the corner missing structure 42 and the slider 31 improves the stability of the connection between the holder 2 and the lower insulating plastic 1. The corner missing structure 42 is provided so that it is more convenient for an operator to observe the position of the side push opening 411 from the missing corner of the corner missing structure 42, and the corner missing structure 42 has a function of guiding the mounting of the slider 31.

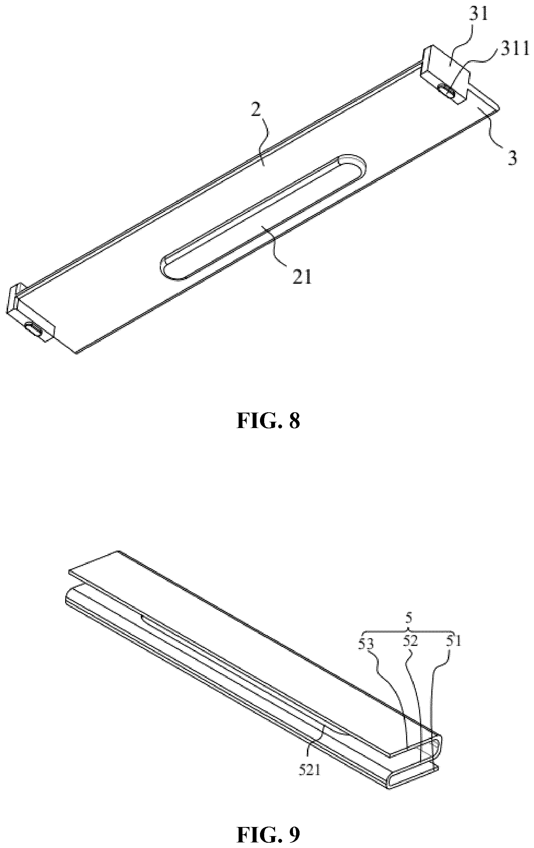

As shown in FIGS. 6 and 8, to strengthen the stability of a connection relationship between the holder 2 and the lower insulating plastic 1, a snap assembly is disposed between the slider 31 and the corner missing structure 42 and includes a snap slot 421 and a snap block 311 to which the snap slot 421 can be snap-fitted, one of the slider 31 or the corner missing structure 42 is provided with the snap slot 421, and the other one of the slider 31 or the corner missing structure 42 is provided with the snap block 311. In this embodiment, the snap block 311 is fixedly connected to the slider 31, and the snap slot 421 is opened on an inner wall of the corner missing structure 42. When the first side push connecting portion 3 is connected to the second side push connecting portion 4, the snap block 311 is snap-fitted in the snap groove 421, so as to prevent the first side push connecting portion 3 from sliding out of the side push chute 41, thereby ensuring a reinforcing effect.

The holder 2 is securely mounted on the lower insulating plastic 1 by a side push, and the first side push connecting portion 3 slides into a first chute through the side push opening 411. At the same time, the slider 31 enters the corner missing structure 42, an outer wall of the slider 31 abuts against the inner wall of the corner missing structure 42, and the snap block 311 is snap-fitted in the snap slot 421, so as to complete the installation and fixation of the holder 2. The side push installation manner makes the installation of the holder 2 very convenient. The side push direction is along the thickness direction of the cell, and the holder 2 does not interfere with the tab 5 so that the internal structure of the cell is stable, thereby avoiding the pole core 9 from shaking and improving the stability of the cell and the safety performance of the cell.

As shown in FIGS. 2 and 3, the terminal 7 is provided with at least one post 71, and at least one of the at least one post 71 on the terminal 7 is welded to the tab 5. In this embodiment, one terminal 7 is provided with two posts 71. Referring to FIG. 9, the tab 5 includes a first connecting portion 51, a bend 52, and a second connecting portion 53, where the first connecting portion 51 is connected to the pole core 9, the bend 52 connects the first connecting portion 51 to the second connecting portion 53, the second connecting portion 53 is connected to the terminal 7, and when the first side push connecting portion 3 is mounted on the second side push connecting portion 4 by a side push, the holder 2 is inserted between the first connecting portion 51 and the bend 52.

The tab 5 is provided with an empty slot 521 on the bend 52, and a weak overcurrent region is formed at an edge of the empty slot 521 of the tab 5. An overcurrent sectional area of the tab 5 is not greater than 15 mm², and the weak overcurrent region acts as a protection device. When the current is too large, this region automatically fuses so as to protect the cell. A protrusion 21 is disposed on a side of the holder 2 facing the lower insulating plastic 1, and when the holder 2 is inserted between the first connecting portion 51 and the bend 52, the protrusion 21 can be inserted into the empty slot 521. The holder 2 plays a role of fixing the tab 5 through the protrusion 21. The holder 2 isolates the tab 5 from the pole core 9 and prevents the following: When the tab 5 acts as an external short-circuit protection device, the pole core 9 is damaged and a safety accident is caused. In other embodiments, multiple empty slots 521 may be provided, multiple protrusions 21 may be provided correspondingly, and the empty slots 521 are in a one-to-one correspondence with the protrusions 21.

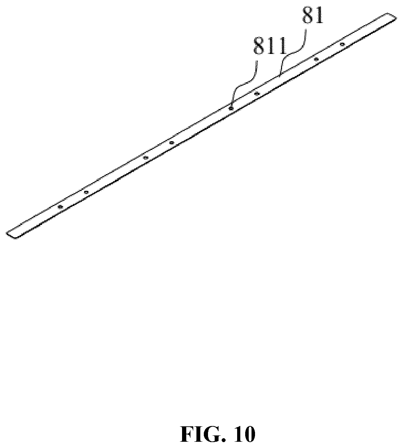

The structural design of the internal fixed structure of the cell is not limited to the type of the battery, nor is it limited to whether battery terminals 7 are on the same side or different sides, and one or two internal fixed structures of the cell are provided. In this embodiment, as shown in FIG. 1, two internal fixed structures are provided, and the two internal fixed structures are disposed on different sides of the cell. The tab 5 includes a positive tab and a negative tab that are disposed on the different sides of the cell. The pole core 9 is disposed between the two internal fixed structures of the cell. A first end of the pole core 9 abuts against the abutting surface 11 of one lower insulating plastic 1, and a second end of the pole core 9 abuts against the abutting surface 11 of another lower insulating plastic 1. As shown in FIGS. 1 and 10, to increase the fixing effect on the pole core 9, a bottom bracket 81 is fixedly disposed between the housing 8 and the pole core 9. In this embodiment, two bottom brackets 81 are provided, and the two bottom brackets 81 are disposed on two sides of the pole core 9, each bottom bracket 81 is provided with multiple spaced openings 811, and the surface is glued for fixing. The bottom brackets 81 protect and support the pole core 9, and at the same time, the electrolyte and a pole piece of the pole core 9 are better wetted.

In another embodiment, one internal fixed structure of the cell may be provided, the tab 5 includes the positive tab and the negative tab that are disposed on the same side of the cell, positive and negative terminals 7 of the cell are on the same side of the cell, and the abutting surface 11 of the lower insulating plastic 1 mates with the housing 8 so as to abut the pole core 9 in the middle so that the pole core 9 is fixed and prevented from being displaced.

When the positive and negative terminals of the cell are on the same side, one internal fixed structure of the cell is provided, and the abutting surface 11 of the lower insulating plastic 1 mates with the housing 8 so as to abut the pole core 9 in the middle so that the pole core 9 is fixed and prevented from being displaced. When the positive and negative terminals of the cell are on the different sides, two internal fixed structures of the cell are provided correspondingly, and the abutting surface 11 of the lower insulating plastic 1 mates with the abutting surface 11 of the lower insulating plastic 1 on a different side so as to abut the pole core 9 in the middle so that the pole core 9 is fixed, thereby improving the stability of the cell and the safety performance of the cell.

In this embodiment, the overcurrent area of the tab 5 required per unit of the length of the cell is S, the width of the tab 5 is W, the number of layers of the tab 5 is N, where S = W × N; the length of the cell is L, and the ratio of the overcurrent area S of the tab 5 to the length L of the cell is 2 to 25, such as 2, 6, 10, 20 and 25; and the length of the pole core 9 is l, and the ratio of the length l of the pole core 9 to the length L of the cell is 0.93 to 0.99, such as 0.93, 0.95, 0.97, 0.98 and 0.99.

An implementation principle of the cell in this embodiment is described as follows: The internal fixed structure of the cell is provided, the holder 2 is mounted on the lower insulating plastic 1 by a side push, the abutting surface 11 of the lower insulating plastic 1 abuts against the pole core 9, and the pole core 9 mates with the housing 8 or the lower insulating plastic 1 on a different side so that the pole core 9 is fixed and prevented from being displaced; after the lower insulating plastic 1 is assembled, the holder 2 enters the lower plastic by a side push, the tab 5 is isolated from the pole core 9, the protrusion 21 on an upper surface of the holder 2 passes through the empty slot 521 in the weak overcurrent region of the tab 5 and plays a fixing role, and the following can be prevented: when the tab 5 acts as an external short-circuit protection device, the pole core 9 is damaged and a safety accident is caused.

## Claims

1. A cell, comprising:
an internal fixed structure of the cell comprising a lower insulating plastic (1) and a holder (2) mounted on the lower insulating plastic (1), wherein the lower insulating plastic (1) is provided with an abutting surface (11);
a pole core (9), wherein the abutting surface (11) abuts against the pole core (9);
a housing (8), wherein the pole core (9) is disposed in the housing (8);
a tab (5) connected to the pole core (9); and
a top cover (6), wherein the top cover (6) is provided with a terminal (7), the top cover (6) is connected to an end of the housing (8), and the top cover (6) is connected to the lower insulating plastic (1) of the internal fixed structure of the cell,
wherein the abutting surface (11) of the lower insulating plastic (1) and the housing (8) each abut against an outer wall of the pole core (9).

2. The cell of claim 1, wherein the holder (2) is provided with a first side push connecting portion (3), the lower insulating plastic (1) is provided with a second side push connecting portion (4), and the holder (2) is configured to be mounted on the second side push connecting portion (4) through the first side push connecting portion (3) by side-pushing along a thickness direction of the cell.

3. The cell of claim 2, wherein the first side push connecting portion (3) is disposed at edges of two sides of the holder (2), the second side push connecting portion (4) comprises a side push chute (41) opened on the lower insulating plastic (1), a side push opening (411) is opened at an end of the side push chute (41), and the first side push connecting portion (3) is configured to slide into the side push chute (41) through the side push opening (411).

4. The cell of claim 3, wherein the first side push connecting portion (3) is provided with a slider (31), the slider (31) is fixedly connected to the holder (2), the second side push connecting portion (4) comprises a corner missing structure (42) disposed on the holder (2), the corner missing structure (42) is connected to the side push opening (411), and the first side push connecting portion (3) is configured to, when sliding into the side push chute (41), drive the slider (31) to enter the corner missing structure (42).

5. The cell of claim 4, wherein a snap assembly is disposed between the slider (31) and the corner missing structure (42) and comprises a snap slot (421) and a snap block (311) to which the snap slot (421) is snap-fitted, and
wherein one of the slider (31) or the corner missing structure (42) is provided with the snap slot (421), and another one of the slider (31) or the corner missing structure (42) is provided with the snap block (311).

6. The cell of any one of claims 1 to 5, wherein the terminal (7) is provided with at least one post (71), and at least one of the at least one post (71) on the terminal (7) is welded to the tab (5).

7. The cell of any one of claim 6, wherein the tab (5) comprises a first connecting portion (51), a bend (52), and a second connecting portion (53), wherein the first connecting portion (51) is connected to the pole core (9), the bend (52) connects the first connecting portion (51) to the second connecting portion (53), the second connecting portion (53) is connected to the terminal (7); and the holder (2) is configured to be inserted between the first connecting portion (51) and the bend (52) when the first side push connecting portion (3) is mounted on the second side push connecting portion (4) by side-pushing.

8. The cell of claim 7, wherein the tab (5) is provided with an empty slot (521) on the bend (52), a weak overcurrent region is formed at an edge of the empty slot (521) of the tab (5), and a protrusion (21) is disposed on a side of the holder (2) facing the lower insulating plastic (1) and configured to be inserted into the empty slot (521).

9. The cell of any one of claims 1 to 5, wherein two internal fixed structures of the cell are provided, the two internal fixed structures of the cell are disposed on opposite sides of the cell, the pole core (9) is disposed between the two internal fixed structures of the cell, a first end of the pole core (9) abuts against the abutting surface (11) of the lower insulating plastic (1) of one of the two internal fixed structures, and a second end of the pole core (9) abuts against the abutting surface (11) of the lower insulating plastic (1) of another one of the two internal fixed structures.

10. The cell of any one of claims 1 to 5, wherein an overcurrent area of the tab (5) required per unit of a length of the cell is S, a width of the tab (5) is W, and a number of layers of the tab (5) is N, wherein S = W × N; the length of the cell is L, and a ratio of the overcurrent area S of the tab (5) to the length L of the cell is 2 to 25; and a length of the pole core (9) is l, and a ratio of the length l of the pole core (9) to the length L of the cell is 0.93 to 0.99.

11. The cell of any one of claims 1 to 5, wherein a bottom bracket (81) is fixedly disposed between the housing (8) and the pole core (9).

12. The cell of any one of claim 11, wherein the bottom bracket (81) is provided with a plurality of spaced openings (811) at intervals.
